# FASCICULE DE BREVET EUROPEEN

(11) **EP 3 970 579 B1**
(45) Date de publication et mention de la délivrance du brevet: **26.07.2023**
(21) Numéro de dépôt: 21195658.6
(22) Date de dépôt: 09.09.2021
(51) Int. Cl.: A47J 31/44

(54) **MACHINE À CAFÉ AUTOMATIQUE MUNIE D'UN DISPOSITIF ANTI-BASCULEMENT D'UN BAC À CAKES**
AUTOMATISCHE KAFFEEMASCHINE MIT KIPPSCHUTZVORRICHTUNG EINER KUCHENSCHALE
AUTOMATIC COFFEE MACHINE EQUIPPED WITH A NON-TILT DEVICE OF A CAKE TRAY

(30) Priorité: 17.09.2020 FR 2009444
(43) Date de publication de la demande: 23.03.2022
(73) Titulaire: SEB S.A., 69130 Ecully (FR)
(72) Inventeur: DUTERTRE, Thierry, 61000 SAINT-GERMAIN-DU-CORBEIS (FR)
(74) Mandataire: SEB Développement

(56) Documents cités:
- EP-A1- 0 153 549
- EP-A1- 0 761 150
- EP-A1- 3 682 773
- WO-A1-2019/158542
- WO-A2-2009/135869
- FR-A1- 2 994 377

## Description

La présente invention se rapporte au domaine technique général des machines à café automatiques comportant une chambre d'infusion alimentée en mouture de café pour préparer une boisson, plus particulièrement une machine à café automatique comportant un bac de récupération des galettes de mouture appelé également bac à cakes.

Il est connu du document EP1935298 une machine à café automatique comportant un bâti comprenant un logement de réception d'un bac de récupération de galettes de mouture. Le logement comporte une ouverture et le bac comportant une façade avant. Le bac est mobile en translation horizontale entre une position insérée dans laquelle la façade avant ferme l'ouverture et une position extraite dans laquelle le bac est sorti du logement. Le document EP 0 761 150 A1 décrit aussi une machine à café avec un bac de récupération de galettes de mouture mobile en translation horizontale.

Cependant, lors du passage de la position insérée à la position extraite le bac, l'utilisateur peut le faire basculer, notamment vers le bas et le bas de la façade peut toucher des éléments présents devant le bâti et gêner le déplacement du bac.

De plus, le bac est le plus souvent agencé dans le logement avec un jeu important qui dégrade la qualité perçue lorsque l'utilisateur retire ou remet le bac dans son logement.

Le but de la présente invention est de remédier aux inconvénients précités et de proposer une machine à café automatique qui présente une mise en oeuvre simple et ergonomique.

Un autre but de la présente invention est de proposer une machine à café automatique qui présente une conception simple et qui soit économique à mettre en oeuvre.

Ces buts sont atteints avec une machine à café automatique comportant un bâti comprenant un logement de réception d'un bac de récupération de galettes de mouture, le logement comportant une ouverture et le bac comportant une façade avant, le bac étant mobile en translation horizontale selon une direction Δ entre une position insérée dans laquelle la façade avant ferme l'ouverture et une position extraite dans laquelle le bac est sorti du logement, caractérisée en ce qu'elle comporte un dispositif anti basculement du bac lors du passage de la position insérée à la position extraite et réciproquement, le dispositif anti basculement comportant un organe d'appui mobile agencé sur une partie arrière du bac et qui coopère avec une face supérieure du logement sous l'action d'un moyen de rappel.

Par dispositif anti-basculement, on comprend que le dispositif maintient une paroi de fond du bac en contact avec une face inférieure du logement lors du passage de la position insérée à la position extraite.

Ainsi, l'organe d'appui, sous l'action du moyen de rappel, va créer un point d'appui depuis l'arrière du bac sur la face supérieure du logement pour rattraper un jeu vertical existant entre le bac et le logement. En conséquence, l'action de l'organe d'appui maintient le déplacement du bac en translation parfaitement horizontale.

Avantageusement, le moyen de rappel est formé par un ressort.

De préférence, le moyen de rappel développe sur l'organe d'appui une force supérieure à au moins un dixième du poids du bac.

Une telle disposition permet de limiter voire d'empêcher le basculement du bac lors de son déplacement tout en limitant les efforts de frottement, notamment de l'organe d'appui sur la face supérieure du logement.

Avantageusement, l'organe d'appui est mobile selon une direction perpendiculaire à la direction Δ.

De préférence, l'organe d'appui est agencé sur une paroi arrière du bac.

Ainsi, l'organe d'appui arrête son action lorsque le bac est complètement sorti du logement.

Avantageusement, l'organe d'appui comporte une excroissance de limitation de son déplacement lorsque le bac est en position extraite, l'excroissance coopérant avec une butée agencée sur le bac.

De préférence, le bac présente une longueur L et une hauteur H, le rapport entre la longueur L et la hauteur H étant inférieur à 1.

Une telle disposition permet d'obtenir un bac avec une base réduite mais qui présente une contenance importante en s'étendant majoritairement vers le haut pour être facilement intégré dans une machine à café automatique.

Avantageusement, le logement est de forme conique dans un plan vertical parallèle à la direction Δ.

Une telle disposition permet d'utiliser un procédé de fabrication du bâti par injection plastique. Le procédé de fabrication du bâti par injection plastique est très économique, mais nécessite d'avoir une dépouille pour démouler le logement, notamment dans le plan vertical parallèle à la direction Δ.

De préférence, le logement présente une hauteur avant H1 et une hauteur arrière H2, le rapport H1/H2 étant supérieur à 1,02.

Une telle disposition permet de démouler facilement le logement lors de la fabrication du bâti par injection plastique.

Avantageusement, la machine à café automatique comporte une base à partir de laquelle s'étend verticalement une face avant, la face avant comportant l'ouverture du logement et la machine à café automatique comporte un repose tasse qui s'étend dans le prolongement de la base, devant la façade avant.

Un tel agencement permet un accès facile à la façade avant du bac pour le saisir et le retirer ou le replacer dans le logement.

De manière avantageuse, la façade avant comporte un bord inférieur qui est agencé à proximité d'un plan passant par une paroi supérieure du repose tasse.

Ainsi, le dispositif anti-basculement évite que le bord inférieur ne frotte ou interfère avec la paroi supérieure du repose tasse lors de son retrait ou de sa mise en place dans le logement.

L'invention sera mieux comprise à l'étude du mode de réalisation pris à titre nullement limitatif et illustré dans les figures annexées dans lesquelles :
[Fig. 1] La figure 1 illustre une vue en perspective d'une machine à café automatique comportant un bac de récupération de galettes de mouture muni d'un dispositif anti-basculement selon un mode particulier de réalisation de l'invention.
[Fig. 2] La figure 2 illustre une vue en perspective éclatée du bâti et du bac de récupération de galettes de mouture muni du dispositif anti-basculement de la machine à café automatique illustrée sur la figure 1.
[Fig. 3] La figure 3 illustre une vue en coupe selon la ligne III-III de la machine à café automatique illustrée sur la figure 1, le bac étant en position insérée.
[Fig. 4] La figure 4 illustre une vue en coupe selon la ligne III-III de la machine à café automatique illustrée sur la figure 1, le bac étant en position extraite.
[Fig. 5] La figure 5 illustre un détail V du dispositif anti-basculement du bac de la machine à café automatique illustrée sur la figure 3.

On notera que, dans ce document, les termes «horizontal», «vertical», «inférieur», «supérieur», «longitudinal», «transversal», «haut», «bas», employés pour décrire la machine à café automatique font référence à cette machine reposant sur un plan de travail, en situation d'usage.

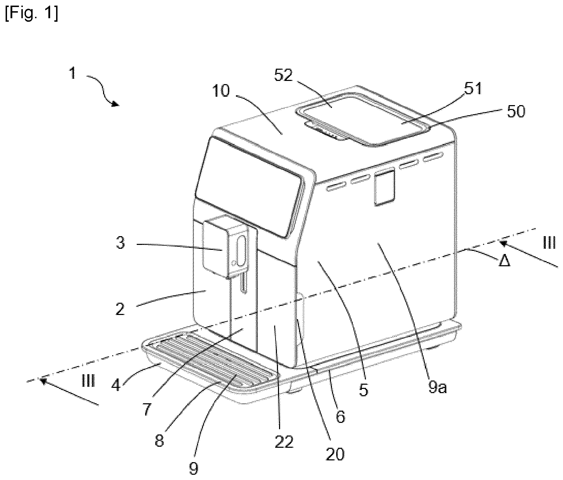

Dans l'exemple de réalisation représenté aux figures 1 à 2, une machine à café automatique 1 comporte un bâti 5 muni d'une base 6 destinée à reposer sur un plan de travail. Le bâti 5 comporte une face avant 7 qui s'étend vers le haut à partir de la base 6. La machine à café automatique 1 comporte un réservoir 2 formant une alimentation en eau froide, un groupe d'infusion (non représentés sur les figures) muni d'une chambre d'infusion alimentée en mouture de café par un broyeur à grains de café. Le groupe d'infusion comporte un piston presseur comprimant la mouture dans la chambre d'infusion pour former une galette de mouture. Le groupe d'infusion comporte un dispositif d'expulsion de la galette de mouture dans un bac 20 de récupération des galettes de mouture. Un tel groupe d'infusion a été décrit plus en détail dans le brevet EP1827182.

La machine à café automatique 1 comporte une tête de distribution 3 du café (Fig.1) qui est agencée sur la face avant 7 et qui comprend des sorties de café reliées à la chambre d'infusion. La tête de distribution 3 est agencée au-dessus d'un repose tasse 4. Le repose tasse 4 s'étend dans le prolongement de la base 6, devant la face avant 7. Le repose tasse 4 comporte une paroi supérieure 8 qui comprend des nervures 9 transversales sur lesquelles les tasses vont reposer. La tête de distribution 3 est montée mobile en translation verticale pour permettre à un utilisateur d'ajuster la position des sorties de café à la hauteur de la tasse. La machine à café automatique 1 comporte un bac à grains de café 50 agencé au-dessus du broyeur, au niveau d'une paroi supérieure 10 du bâti 5. Le bac à grains de café 50 comporte une ouverture 51 supérieure de chargement des grains de café. L'ouverture 51 supérieure est recouverte par un couvercle 52 amovible.

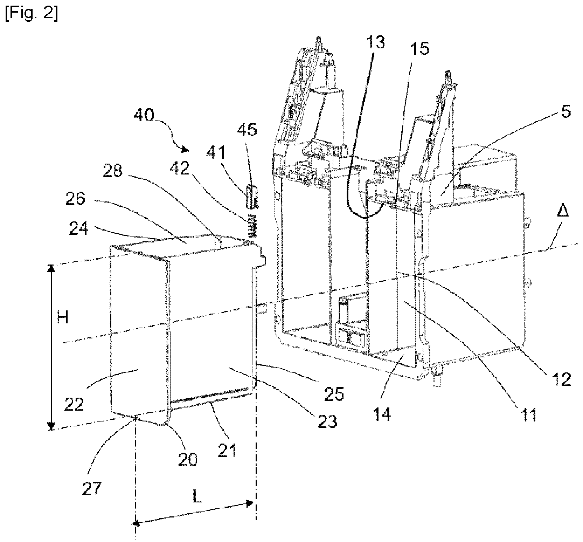

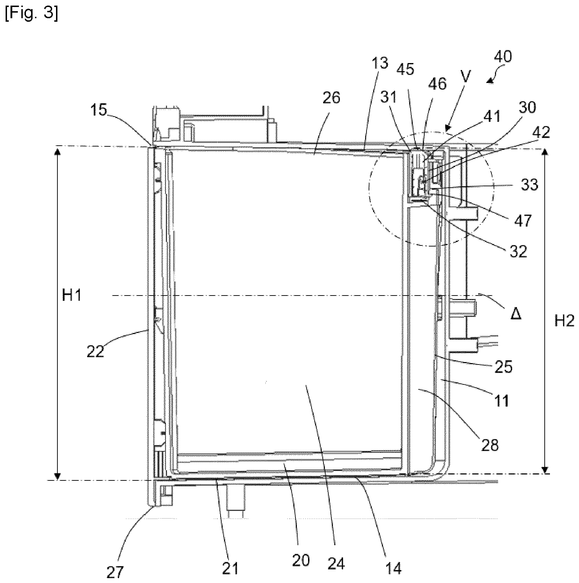

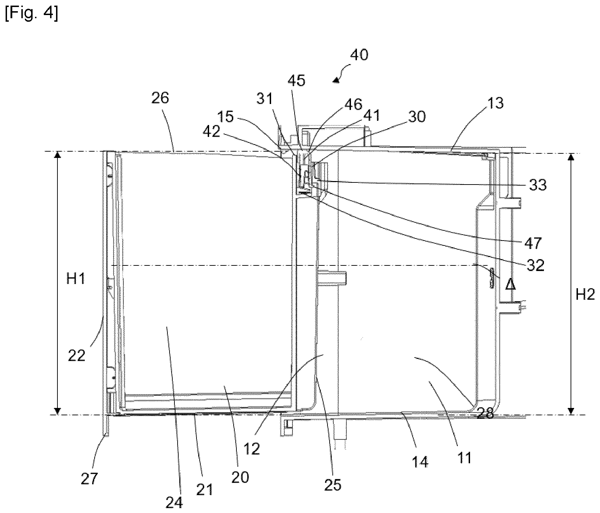

Conformément aux figures 2 à 4, le bâti 5 comporte un logement 11 muni d'une ouverture 12 agencée dans la face avant 7, à côté de la tête de distribution 3. Le logement 11 est destiné à recevoir le bac 20 de récupération de galettes de mouture. Le logement 11 s'étend horizontalement vers l'intérieur du bâti 5 et de manière perpendiculaire à la face avant 7 selon une direction Δ. Le logement 11 présente une forme conique dans un plan vertical parallèle à la direction Δ (Fig. 3 et 4). Le logement 11 présente une hauteur avant H1 égale à 17,4 centimètres et une hauteur arrière H2 égale à 16,8 centimètres, le rapport H1/H2 étant égal à 1,03 (Fig. 3 et 4). La hauteur du logement 11 évolue régulièrement le long de l'axe Δ entre la hauteur avant H1 et la hauteur arrière H2.

Le bac 20 comporte une paroi de fond 21 depuis laquelle s'étendent vers le haut une façade avant 22, deux parois latérales 23, 24 et une paroi arrière 25. La façade avant 22, les deux parois latérales 23, 24 et la paroi arrière 25 définissent une ouverture supérieure 26 par laquelle entrent les galettes de mouture évacuées par le dispositif d'expulsion du groupe d'infusion. Le bac 20 présente une longueur L égale à 13 centimètres et une hauteur H égale à 16 centimètres (Fig.2), le rapport entre la longueur L et la hauteur H étant égal à 0,8. Le bac 20 est mobile en translation horizontale selon la direction Δ entre une position insérée dans laquelle la façade avant 22 ferme l'ouverture 12 et une position extraite dans laquelle le bac 10 est sorti du logement 11. La façade avant 22 du bac 20 comporte un bord inférieur 27 qui est agencé à proximité d'un plan passant par la paroi supérieure10 du repose tasse 4.

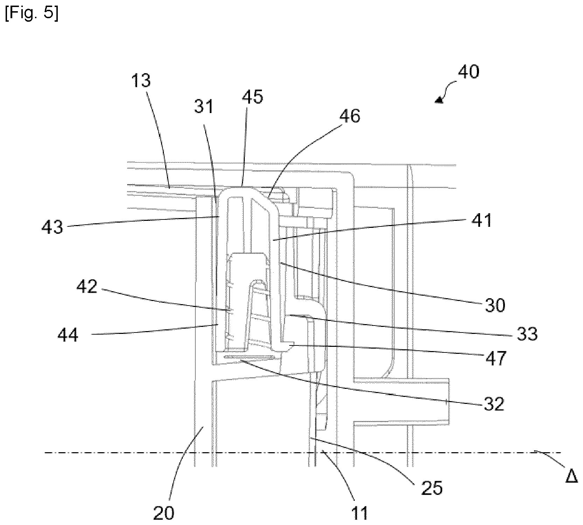

Conformément aux figures 2 à 5, la machine à café automatique 1 comporte un dispositif anti-basculement 40 du bac 20 lors du passage de la position insérée à la position extraite et réciproquement. Le dispositif anti-basculement 40 comporte un organe d'appui 41 mobile verticalement, agencé sur la paroi arrière 25 du bac 20 et qui coopère avec une face supérieure 13 du logement 11 sous l'action d'un ressort 42. La paroi arrière 25 comporte une cavité 30 de réception de l'organe mobile 41. La cavité 30 s'étend vers le haut, perpendiculairement à la direction Δ. La cavité 30 comporte un orifice supérieur 31 agencé au niveau de l'ouverture supérieure 26 du bac 20 et une cloison de fond 32. L'organe d'appui 41 est monté coulissant dans la cavité 30. Tel que visible à la figure 5, l'organe d'appui 41 comporte une extrémité supérieure 43 comportant une surface d'appui horizontale 45 qui est destinée à coopérer avec la face supérieure 13 du logement 11. L'organe d'appui 41 comporte une extrémité inférieure 44. Le ressort 42 est agencé entre l'extrémité inférieure 44 et la cloison de fond 32 pour pousser la surface d'appui horizontale 45 contre la face supérieure 13 du logement 11. Ainsi la pression exercée par la surface d'appui horizontale 45 sur la face supérieure 13 du logement 11 maintient la paroi de fond 21 du bac 20 en contact avec une face inférieure 14 du logement 11 lors du passage de la position insérée à la position extraite. Le ressort 42 applique sur l'organe d'appui 41 une force supérieure à au moins un dixième du poids du bac 20. L'organe d'appui 41 parcourt le long de la direction verticale, lorsque le bac 20 est déplacé entre la position insérée et la position extraite, une course égale à H2 moins H1.

L'organe d'appui 41 comporte une excroissance 47 de limitation de son déplacement lorsque le bac 20 est en position extraite, complètement sorti du logement 11. L'excroissance 47 s'étend latéralement à la direction verticale et coopère avec une butée 33 agencée latéralement à la cavité 30. L'extrémité supérieure 43 comporte une surface inclinée 46 agencée dans le prolongement de la surface d'appui horizontale 45. L'ouverture 12 du logement 11 comporte une bordure supérieure 15 qui est destinée à coopérer avec la surface inclinée 46 pour repousser l'organe d'appui 41 vers le bas lors de l'introduction du bac 20 dans le logement 11et ainsi positionner la surface d'appui horizontale 45 au même niveau que la face supérieure 13.

En fonctionnement, l'utilisateur qui souhaite vider le bac 20 de récupération des galettes de mouture va saisir la façade avant 22 puis sortir le bac 20 en le faisant passer de la position insérée à la position extraite. Lors de ce déplacement du bac 20, l'organe d'appui 41 va coulisser vers le haut sous l'action du ressort 42 pour pousser la surface d'appui horizontale 45 contre la face supérieure 13 du logement 11 et maintenir la paroi de fond 21 du bac 20 en contact avec la face inférieure 13 du logement 11. Le coulissement de l'organe d'appui 41 permet à la surface d'appui horizontale 45 d'adapter sa position à la hauteur variable du logement 11 entre la hauteur arrière H2 et la hauteur avant H1 et ainsi rattraper un jeu vertical existant entre le bac 20 et le logement 11. L'action de l'organe d'appui 41 maintient le déplacement du bac en translation parfaitement horizontale jusqu'à la position extraite, sans que le bord inférieur 27 de la façade avant 22 ne frotte ou interfère avec les nervures 9 de la paroi supérieure 8 du repose tasse 4.

Pour remettre le bac 20 dans le logement 11 pour le faire passer de la position extraite à la position insérée, l'utilisateur met en oeuvre un mode opératoire inverse au mode opératoire précédent.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention defini par les revendications.

Dans une variante de réalisation qui n'est pas couverte par les revendications, le dispositif anti-basculement comporte un organe d'appui mobile agencé une face supérieure du logement et qui coopère avec une partie arrière du bac sous l'action d'un moyen de rappel. L'organe d'appui peut prendre la forme d'une barre qui s'étend le long de la direction Δ

## Revendications

1. Machine à café automatique (1) comportant un bâti (5) comprenant un logement (11) de réception d'un bac (20) de récupération de galettes de mouture, le logement (11) comportant une ouverture (12) et le bac (20) comportant une façade avant (22), le bac (20) étant mobile en translation horizontale selon une direction Δ entre une position insérée dans laquelle la façade avant (22) ferme l'ouverture (12) et une position extraite dans laquelle le bac (20) est sorti du logement (11), **caractérisée en ce qu'**elle comporte un dispositif anti basculement (40) du bac (20) lors du passage de la position insérée à la position extraite et réciproquement, le dispositif anti basculement (40) comportant un organe d'appui (41) mobile agencé sur une partie arrière (28) du bac (20) et qui coopère avec une face supérieure (13) du logement (11) sous l'action d'un moyen de rappel (42).

2. Machine à café automatique (1) selon la revendication 1, **caractérisée en ce que** le moyen de rappel est formé par un ressort (42).

3. Machine à café automatique (1) selon l'une quelconque des revendications 1 à 2, **caractérisée en ce que** le moyen de rappel (42) développe sur l'organe d'appui (41) une force supérieure à au moins un dixième du poids du bac (20).

4. Machine à café automatique (1) selon l'une quelconque des revendications 1 à 3, **caractérisée en ce que** l'organe d'appui (41) est mobile selon une direction perpendiculaire à la direction Δ.

5. Machine à café automatique (1) selon l'une quelconque des revendications 1 à 4, **caractérisée en ce que** l'organe d'appui (41) est agencé sur une paroi arrière (25) du bac (20).

6. Machine à café automatique (1) selon l'une quelconque des revendications 1 à 5, **caractérisée en ce que** l'organe d'appui (41) comporte une excroissance (47) de limitation de son déplacement lorsque le bac (20) est en position extraite, l'excroissance (47) coopérant avec une butée (33) agencée sur le bac (20).

7. Machine à café automatique (1) selon l'une quelconque des revendications 1 à 6, **caractérisée en ce que** le bac (20) présente une longueur L et une hauteur H, le rapport entre la longueur L et la hauteur H étant inférieur à 1.

8. Machine à café automatique (1) selon l'une quelconque des revendications 1 à 7, **caractérisée en ce que** le logement (11) est de forme conique dans un plan vertical, parallèle à la direction Δ.

9. Machine à café automatique (1) selon la revendication 8, **caractérisée en ce que** le logement (11) présente une hauteur avant H1 et une hauteur arrière H2, le rapport H1/H2 étant supérieur à 1,02.

10. Machine à café automatique (1) selon l'une quelconque des revendications 1 à 9, **caractérisée en ce qu'**elle comporte une base (6) à partir de laquelle s'étend verticalement une face avant (7), la face avant (7) comportant l'ouverture (12) du logement (11) et **en ce qu'**elle comporte un repose tasse (4) qui s'étend dans le prolongement de la base (6), devant la façade avant (22).

## Patentansprüche

1. Automatische Kaffeemaschine (1), umfassend ein Gehäuse (5), beinhaltend eine Aufnahmekammer (11) eines Behälters (20) zur Wiedergewinnung von Mahlgutkuchen, wobei die Kammer (11) eine Öffnung (12) umfasst und der Behälter (20) eine Vorderseite (22) umfasst, wobei der Behälter (20) horizontal gemäß einer Richtung Δ zwischen einer eingeführten Position, in der die Vorderseite (22) die Öffnung (12) verschließt, und einer herausgezogenen Position, in der der Behälter (20) aus der Kammer (11) herausgenommen ist, verschiebbar ist, **dadurch gekennzeichnet, dass** sie eine Vorrichtung gegen Kippen (40) des Behälters (20) beim Übergang von der eingeführten Position zu der herausgezogenen Position und umgekehrt umfasst, wobei die Vorrichtung gegen Kippen (40) ein bewegliches Stützelement (41) umfasst, das an einem hinteren Teil (28) des Behälters (20) angeordnet ist und mit einer oberen Seite (13) der Kammer (11) unter der Wirkung eines Rückstellmittels (42) zusammenwirkt.

2. Automatische Kaffeemaschine (1) nach Anspruch 1, **dadurch gekennzeichnet, dass** das Rückstellmittel durch eine Feder (42) gebildet ist.

3. Automatische Kaffeemaschine (1) nach einem der Ansprüche 1 bis 2, **dadurch gekennzeichnet, dass** das Rückstellmittel (42) an dem Stützelement (41) eine Kraft entfaltet, die größer als mindestens ein Zehntel des Gewichts des Behälters (20) ist.

4. Automatische Kaffeemaschine (1) nach einem der Ansprüche 1 bis 3, **dadurch gekennzeichnet, dass** das Stützelement (41) gemäß einer Richtung senkrecht zu der Richtung Δ beweglich ist.

5. Automatische Kaffeemaschine (1) nach einem der Ansprüche 1 bis 4, **dadurch gekennzeichnet, dass** das Stützelement (41) an einer hinteren Wand (25) des Behälters (20) angeordnet ist.

6. Automatische Kaffeemaschine (1) nach einem der Ansprüche 1 bis 5, **dadurch gekennzeichnet, dass** das Stützelement (41) einen Vorsprung (47) zur Begrenzung seiner Verschiebung umfasst, wenn der Behälter (20) in der herausgezogenen Position vorliegt, wobei der Vorsprung (47) mit einem Anschlag (33) zusammenwirkt, der an dem Behälter (20) angeordnet ist.

7. Automatische Kaffeemaschine (1) nach einem der Ansprüche 1 bis 6, **dadurch gekennzeichnet, dass** der Behälter (20) eine Länge L und eine Höhe H aufweist, wobei das Verhältnis zwischen der Länge L und der Höhe H kleiner als 1 ist.

8. Automatische Kaffeemaschine (1) nach einem der Ansprüche 1 bis 7, **dadurch gekennzeichnet, dass** die Kammer (11) in einer vertikalen Ebene, parallel zu der Richtung Δ, von konischer Form ist.

9. Automatische Kaffeemaschine (1) nach Anspruch 8, **dadurch gekennzeichnet, dass** die Kammer (11) einen vordere Höhe H1 und eine hintere Höhe H2 aufweist, wobei das Verhältnis H1/H2 größer als 1,02 ist.

10. Automatische Kaffeemaschine (1) nach einem der Ansprüche 1 bis 9, **dadurch gekennzeichnet, dass** sie eine Basis (6) umfasst, ausgehend von der sich eine vordere Seite (7) vertikal erstreckt, wobei die vordere Seite (7) die Öffnung (12) der Kammer (11) umfasst, und dadurch, dass sie eine Tassenablage (4) umfasst, die sich in der Verlängerung der Basis (6), vor der Vorderseite (22), erstreckt.

## Claims

1. Automatic coffee machine (1) including a casing (5) comprising a housing (11) for receiving a container (20) for recovering ground coffee cakes, the housing (11) including an opening (12) and the container (20) including a front panel (22), the container (20) being movable in horizontal translation in a direction Δ between an inserted position in which the front panel (22) closes the opening (12) and extracted position in which the container (20) is removed from the housing (11), **characterised in that** it includes an anti-tilt device (40) of the container (20) when it moves from the inserted position to the extracted position and vice versa, the anti-tilt device (40) including a movable support member (41) arranged on a rear part (28) of the container (20) and which cooperates with an upper face (13) of the housing (11) under the action of a return means (42).

2. Automatic coffee machine (1) according to claim 1, **characterised in that** the return means is formed by a spring (42).

3. Automatic coffee machine (1) according to any of claims 1 to 2, **characterised in that** the return means (42) develops on the support member (41) a force greater than at least one tenth of the weight of the container (20).

4. Automatic coffee machine (1) according to any of claims 1 to 3, **characterised in that** the support member (41) is movable in a direction perpendicular to direction Δ.

5. Automatic coffee machine (1) according to any of claims 1 to 4, **characterised in that** the support member (41) is arranged on a rear wall (25) of the container (20).

6. Automatic coffee machine (1) according to any of claims 1 to 5, **characterised in that** the support member (41) includes a protrusion (47) for limiting its displacement when the container (20) is in an extracted position, the protrusion (47) cooperating with a stop (33) arranged on the container (20).

7. Automatic coffee machine (1) according to any of claims 1 to 6, **characterised in that** the container (20) has a length L and a height H, the ratio between the length L and the height H being less than 1.

8. Automatic coffee machine (1) according to any of claims 1 to 7, **characterised in that** the housing (11) is conical in shape in a vertical plane, parallel to direction Δ.

9. Automatic coffee machine (1) according to claim 8, **characterised in that** the housing (11) has a front height H1 and a rear height H2, the ratio of H1/H2 being greater than 1.02.

10. Automatic coffee machine (1) according to any of claims 1 to 9, **characterised in that** it includes a base (6) from which a front face (7) extends vertically, the front face (7) including the opening (12) of the housing (11) and **in that** it includes a cup rest (4) which extends in extension of the base (6), in front of the front panel (22).
